# EUROPÄISCHE PATENTSCHRIFT

(11) **EP 4 306 387 B1**
(45) Veröffentlichungstag und Bekanntmachung des Hinweises auf die Patenterteilung: **22.10.2025**
(21) Anmeldenummer: 23178152.7
(22) Anmeldetag: 08.06.2023
(51) Int. Cl.: B62D 15/02, B60T 8/00

(54) **VERFAHREN ZUM BETREIBEN EINES FAHRZEUGS**
METHOD FOR OPERATING A VEHICLE
PROCÉDÉ DE FONCTIONNEMENT D'UN VÉHICULE

(30) Priorität: 15.07.2022 DE 102022207230
(43) Veröffentlichungstag der Anmeldung: 17.01.2024
(73) Patentinhaber: Continental Reifen Deutschland GmbH, 30175 Hannover (DE)
(72) Erfinder: Sahlmüller, Baldo, 30165 Hannover (DE); Kurz, Martin, 30165 Hannover (DE); Pietsch, Holger, 30165 Hannover (DE)
(74) Vertreter: Continental Corporation

(56) Entgegenhaltungen:
- DE-A1- 102004 003 886
- DE-A1- 102020 215 816
- DE-A1- 19 940 007

## Beschreibung

Die Erfindung betrifft ein Verfahren zum Betreiben eines Fahrzeugs, eine Betriebsvorrichtung und ein Fahrzeug.

Die Erfindung geht aus von einem Verfahren zum Betreiben eines Fahrzeugs, aufweisend die folgenden Schritte:
- Bereitstellen eines Fahrzeugs, wobei das Fahrzeug eine erste Achse mit Rädern aufweist, wobei die Räder Reifen aufweisen, und mindestens eine zweite Achse mit Rädern aufweist, wobei die Räder Reifen aufweisen, und ein Bremssystem aufweist, wobei das Bremssystem eine Bremsvorrichtung, geeignet zum Bremsen der Räder der ersten Achse und der Räder der mindestens einen zweiten Achse, und eine Betriebsvorrichtung, geeignet zum Betreiben der Bremsvorrichtung, aufweist,
- Starten eines Bremsvorgangs mit der Bremsvorrichtung und Bremsen der Räder der ersten Achse und der Räder der mindestens einen zweiten Achse.

Aus dem Stand der Technik sind Verfahren zum Betreiben eines Fahrzeugs bekannt. Dabei ist es aus dem Stand der Technik auch bekannt, dass die Räder des Fahrzeugs mittels des Bremssystems gebremst werden, um ein Rollen der Räder des Fahrzeugs zu mindern oder ganz zu verhindern.

Die Dokumente DE 10 2004 003886 A1 und DE 10 2020 215816 A1 können als Stand der Technik zitiert werden.

Bei den aus dem Stand der Technik bekannten Verfahren zum Betreiben eines Fahrzeugs könnte es beispielsweise während eines Einparkvorgangs zu einer Bremsung der Räder kommen, wobei zugleich ein Lenksystem des Fahrzeugs bedient wird um einige der Räder einzuschlagen. Das Einschlagen der Räder bedeutet, dass die Räder gelenkt werden, also, dass eine Rotationsachse eines Rades um einen bestimmten Winkel gedreht wird. Die Rotationsachse ist die Achse, um die herum das Rad in eine Umlaufrichtung rotieren kann. Die Lenkung der Räder einer Achse wird mittels des Lenksystems insbesondere über eine Einwirkung auf die Achse, an der die Räder angeordnet sind, vorgenommen.

Durch den Umstand, wonach die Räder gebremst und gleichzeitig gelenkt werden, könnte ein unerwünschter Abrieb eines auf einem Rad angeordneten Reifens hervorgerufen werden. Hintergrund dieses möglichen Abriebs ist, dass eine Stelle des Reifens auf einem Untergrund gedreht wird. Bei dem Untergrund handelt es sich beispielsweise um einen Parkplatz oder um einen Fahrbahnbereich.

Durch die Drehung auf dem Untergrund könnten Reibungen zwischen dem Reifen und dem Untergrund erzeugt werden. Die Reibungen könnten zu dem unerwünschten Abrieb des Reifens führen.

Der Erfindung liegt somit die Aufgabe zu Grunde, ein Verfahren nach Anspruch zum Betreiben eines Fahrzeugs bereitzustellen, wobei ein möglicher Abrieb von Reifen des Fahrzeugs gemindert wird.

Gelöst wird die erfindungsgemäß gestellte Aufgabe dadurch, dass das Verfahren die folgenden weiteren Schritte aufweist:
- Prüfen, ob ein Lenkmanöver an einer Achse des Fahrzeugs erfolgt, wobei das Lenkmanöver dem Bremsvorgang eindeutig zugeordnet werden kann;
- Übertragen einer Lenkmanöverinformation über ein Lenkmanöver an die Betriebsvorrichtung, für den Fall, wonach ein Lenkmanöver für eine Achse des Fahrzeugs erfasst wird, wobei für den Fall, wonach die Lenkmanöverinformation über ein Lenkmanöver, wobei das Lenkmanöver dem Bremsvorgang eindeutig zugeordnet werden kann, an die Betriebsvorrichtung übertragen worden ist und die Rotationsgeschwindigkeit eines Rades der Achse des Fahrzeugs, für die ein Lenkmanöver erfasst wird, kleiner als die Schwellengeschwindigkeit ist, die Bremsvorrichtung für diese Achse derart betrieben wird, dass die Räder dieser Achse nicht mehr mit der Bremsvorrichtung gebremst werden.

Der Umstand, dass die Räder dieser Achse nicht mehr mit der Bremsvorrichtung gebremst werden, bedeutet insbesondere, dass die Bremsvorrichtung für diese Achse gelöst wird.

Bei der Rotationsgeschwindigkeiten der Räder handelt es sich um die Geschwindigkeiten der Rotationen der Räder um ihre jeweilige Rotationsachse.

Das Erfassen der Rotationsgeschwindigkeiten kann beispielsweise indirekt, zum Beispiel anhand einer Geschwindigkeit des Fahrzeugs, oder direkt, zum Beispiel anhand eines Rotationssensors im Rad, erfolgen.

Insbesondere werden die Werte der Rotationsgeschwindigkeiten an die Betriebsvorrichtung oder an einen Fahrzeugbordcomputer übertragen.

Das Vergleichen der jeweiligen Rotationsgeschwindigkeiten der Räder der ersten Achse und der Räder der mindestens einen zweiten Achse mit einer Schwellengeschwindigkeit erfolgt beispielsweise mittels der Betriebsvorrichtung selbst oder mittels einer weiteren Vorrichtung.

Bei der weiteren Vorrichtung handelt es sich beispielsweise um einen Fahrzeugbordcomputer des Fahrzeugs.

Der Umstand, dass das Lenkmanöver dem Bremsvorgang eindeutig zugeordnet werden kann bedeutet, dass es sich um ein zeitgleich zu dem Bremsvorgang stattfindendes Lenkmanöver handelt.

Die Lenkmanöverinformation über ein Lenkmanöver wird insbesondere mittels eines elektrischen oder elektromagnetischen Signals an die Betriebsvorrichtung übertragen.

Durch den erfindungsgemäßen Umstand, wonach das Verfahren die weiteren Schritte aufweist:
- Prüfen, ob ein Lenkmanöver an einer Achse des Fahrzeugs erfolgt, wobei das Lenkmanöver dem Bremsvorgang eindeutig zugeordnet werden kann;
- Übertragen einer Lenkmanöverinformation über ein Lenkmanöver an die Betriebsvorrichtung, für den Fall, wonach ein Lenkmanöver für eine Achse des Fahrzeugs erfasst wird; wobei für den Fall, wonach die Lenkmanöverinformation über ein Lenkmanöver, wobei das Lenkmanöver dem Bremsvorgang eindeutig zugeordnet werden kann, an die Betriebsvorrichtung übertragen worden ist und die Rotationsgeschwindigkeit eines Rades der Achse des Fahrzeugs, für die ein Lenkmanöver erfasst wird, kleiner als die Schwellengeschwindigkeit ist, die Bremsvorrichtung für diese Achse derart betrieben wird, dass die Räder dieser Achse nicht mehr mit der Bremsvorrichtung gebremst werden,
wird eine mögliche Reibung eines Reifens dadurch vermieden, dass der Reifen auf dem Untergrund abrollen kann, während das Rad gelenkt wird. Ein Abrollen des Reifens geht mit einer geringeren mechanischen Beanspruchung des Reifens einher, als es beispielsweise bei einem Einschlagen eines vollständig gebremsten Rades der Fall sein könnte. Somit wird ein möglicher unerwünschter Abrieb des Reifens vermieden.

Somit wird ein verbessertes Verfahren zum Betreiben eines Fahrzeugs bereitgestellt.

Die Erfindung betrifft weiter eine Betriebsvorrichtung für ein Bremssystem für ein Fahrzeug, wobei die Betriebsvorrichtung das erfindungsgemäßen Verfahren durchführt.

Die Erfindung betrifft ferner ein Fahrzeug, wobei das Fahrzeug eine erste Achse mit Rädern aufweist, wobei die Räder Reifen aufweisen, und mindestens eine zweite Achse mit Rädern aufweist, wobei die Räder Reifen aufweisen, und ein Bremssystem aufweist, wobei das Bremssystem eine Bremsvorrichtung, geeignet zum Bremsen der Räder der ersten Achse und der Räder der mindestens einen zweiten Achse, und eine erfindungsgemäße Betriebsvorrichtung aufweist. Das Fahrzeug kann zwei, drei oder mehr als drei Achsen aufweisen.

Bei dem Fahrzeug handelt es sich beispielsweise um einen PKW, einen LKW oder um ein Zweirad.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung werden die Räder der anderen Achse, wobei für die andere Achse, nach Prüfung dieser Achse auf ein mögliches Lenkmanöver dieser Achse, kein Lenkmanöver erfasst wird, mit der Bremsvorrichtung weiter gebremst. Bei der anderen Achse kann es sich um die erste Achse handeln, wenn für die erste Achse kein Lenkmanöver erfasst wird. Bei der anderen Achse kann es sich um die mindestens eine zweite Achse handeln, wenn für die mindestens eine zweite Achse kein Lenkmanöver erfasst wird.

Gemäß einer nächsten vorzugsweisen Ausgestaltungsform der vorliegenden Erfindung wird die Bremsvorrichtung für die Achse, für die ein Lenkmanöver erfasst wird, derart betrieben, dass die Räder dieser Achse nicht mehr mit der Bremsvorrichtung gebremst werden für den Fall, wonach die jeweiligen Rotationsgeschwindigkeiten von mindestens zwei Rädern der Achse des Fahrzeugs, für die ein Lenkmanöver erfasst wird, kleiner als die Schwellengeschwindigkeit sind.

Gemäß einer nächsten vorzugsweisen Ausgestaltungsform der vorliegenden Erfindung wird die Bremsvorrichtung für die Achse, für die ein Lenkmanöver erfasst wird, derart betrieben, dass die Räder dieser Achse nicht mehr mit der Bremsvorrichtung gebremst werden für den Fall, wonach die jeweiligen Rotationsgeschwindigkeiten sämtlicher Räder der Achse des Fahrzeugs, für die ein Lenkmanöver erfasst wird, kleiner als die Schwellengeschwindigkeit sind.

Gemäß einer nächsten vorzugsweisen Ausgestaltungsform der vorliegenden Erfindung wird die Bremsvorrichtung für die Achse, für die ein Lenkmanöver erfasst wird, derart betrieben, dass die Räder dieser Achse nicht mehr mit der Bremsvorrichtung gebremst werden für den Fall, wonach die jeweiligen Rotationsgeschwindigkeiten mindestens der Hälfte der Räder der Achse des Fahrzeugs, für die ein Lenkmanöver erfasst wird, kleiner als die Schwellengeschwindigkeit sind.

Gemäß einer nächsten vorzugsweisen Ausgestaltungsform der vorliegenden Erfindung wird die Bremsvorrichtung für die Achse, für die ein Lenkmanöver erfasst wird, derart betrieben, dass die Räder dieser Achse nicht mehr mit der Bremsvorrichtung gebremst werden für den Fall, wonach die jeweiligen Rotationsgeschwindigkeiten mehr als der Hälfte der Räder der Achse des Fahrzeugs, für die ein Lenkmanöver erfasst wird, kleiner als die Schwellengeschwindigkeit sind.

Gemäß einer nächsten vorzugsweisen Ausgestaltungsform der vorliegenden Erfindung wird ein Lenkmanöver mittels einer Vorrichtung des Fahrzeugs erfasst und eine Lenkmanöverinformation wird von der Vorrichtung des Fahrzeugs an die Betriebsvorrichtung übertragen.

Bei der Vorrichtung des Fahrzeugs handelt es sich zum Beispiel um eine Fahrzeugbordelektronik oder einen Fahrzeugcomputer.

Die Lenkmanöverinformation wird insbesondere von der Vorrichtung des Fahrzeugs mittels eines elektrischen oder elektromagnetischen Signals an die Betriebsvorrichtung übertragen.

Gemäß einer nächsten vorzugsweisen Ausgestaltungsform der vorliegenden Erfindung wird eine Lenkmanöverinformation erzeugt und an die Betriebsvorrichtung übertragen, wenn eine Lenkwinkeländerung einer Lenkvorrichtung des Fahrzeugs, zum Beispiel einer Lenkstange, erfasst wird. Die Lenkwinkeländerung wird beispielsweise mit einem in dem Fahrzeug verbauten Lenkwinkelsensor erfasst.

Gemäß einer nächsten vorzugsweisen Ausgestaltungsform der vorliegenden Erfindung wird eine Lenkmanöverinformation erzeugt und an die Betriebsvorrichtung übertragen, wenn eine Drehung einer Rotationsachse eines Rades des Fahrzeugs erfasst wird. Die Drehung der Rotationsachse des Rades des Fahrzeugs wird beispielsweise mit einem in dem Fahrzeug verbauten Sensor erfasst, wobei der Sensor zur Erfassung einer Kippung oder Drehung der Rotationsachse um einen Winkel geeignet ist. Es kann sich insbesondere um einen Sensor zur Erfassung einer Spur des Rades, an dem der Reifen angeordnet ist. handeln, also um eine Spursensor.

Die Lenkmanöverinformation wird insbesondere mittels eines elektrischen oder elektromagnetischen Signals an die Betriebsvorrichtung übertragen.

Weitere Vorteile, Merkmale und Einzelheiten, auf die die Erfindung in ihrem Umfang aber nicht beschränkt ist, werden nun anhand der Zeichnung näher beschrieben.

Es zeigt:

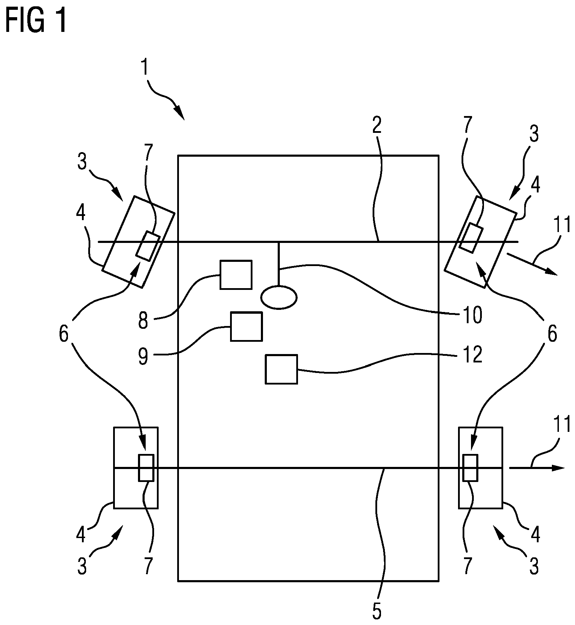

Fig. 1: Ein Fahrzeug mit einem Bremssystem und einer Betriebsvorrichtung wobei das erfindungsgemäße Verfahren durchgeführt werden kann.

**In** der Figur 1 ist ein erfindungsgemäßes Fahrzeug 1 schematisch dargestellt. Das Fahrzeug 1 weist eine erste Achse 2 mit Rädern 3 auf, wobei die Räder 3 Reifen 4 aufweisen, und mindestens eine zweite Achse 5 mit Rädern 3 auf, wobei die Räder 3 Reifen 4 aufweisen.

Das Fahrzeug 1 weist ein Bremssystem 6 auf, wobei das Bremssystem 6 eine Bremsvorrichtung 7, geeignet zum Bremsen der Räder 3 der ersten Achse 2 und der Räder 3 der mindestens einen zweiten Achse 5, und eine Betriebsvorrichtung 8 geeignet zum Betreiben der Bremsvorrichtung 7, aufweist. Die Betriebsvorrichtung 8 ist zur Durchführung eines erfindungsgemäßen Verfahrens geeignet. Die Bremsvorrichtung 7 kann aus einzelnen Bremskomponenten ausgebildet sein, die an den einzelnen Rädern 3 angeordnet sind.

Nach einem Starten eines Bremsvorgangs mit der Bremsvorrichtung 7 und Bremsen der Räder 3 erfolgt das Bestimmen von Rotationsgeschwindigkeiten der Räder 3 der ersten Achse 2 und der Räder 3 der mindestens einen zweiten Achse 5.

Die jeweiligen Rotationsgeschwindigkeiten der Räder 3 der ersten Achse 2 und der Räder 3 der mindestens einen zweiten Achse 5 werden mit einer Schwellengeschwindigkeit verglichen. Der Vergleich der Rotationsgeschwindigkeiten mit der Schwellengeschwindigkeit kann beispielsweise mit einem Fahrzeugbordcomputer 12 erfolgen. Eine Information über den Vergleich wird insbesondere von dem Fahrzeugbordcomputer 12 an die Betriebsvorrichtung 8 übertragen, vorzugsweise elektrisch oder elektromagnetisch.

Ferner erfolgt das Prüfen, ob ein Lenkmanöver an einer Achse 2, 5 des Fahrzeugs 1 erfolgt, wobei das Lenkmanöver dem Bremsvorgang eindeutig zugeordnet werden kann.

Eine Lenkmanöverinformation über ein Lenkmanöver wird an die Betriebsvorrichtung 8 für den Fall übertragen, wonach ein Lenkmanöver für eine Achse 2, 5 des Fahrzeugs 1 erfasst wird. Dabei wird für den Fall, wonach die Lenkmanöverinformation über ein Lenkmanöver, wobei das Lenkmanöver dem Bremsvorgang eindeutig zugeordnet werden kann, an die Betriebsvorrichtung 8 übertragen worden ist und die Rotationsgeschwindigkeit eines Rades 3 der Achse 2, 5 des Fahrzeugs 1, für die ein Lenkmanöver erfasst wird, kleiner als die Schwellengeschwindigkeit ist, die Bremsvorrichtung 7 für diese Achse 2, 5 derart betrieben, dass die Räder 3 dieser Achse 2, 5 nicht mehr mit der Bremsvorrichtung 7 gebremst werden.

Ein Lenkmanöver wird beispielsweise mittels einer Vorrichtung 9 des Fahrzeugs 1 erfasst und eine Lenkmanöverinformation wird von der Vorrichtung 9 des Fahrzeugs 1 an die Betriebsvorrichtung 8 übertragen.

Insbesondere wird eine Lenkmanöverinformation erzeugt und an die Betriebsvorrichtung 8 übertragen, wenn eine Lenkwinkeländerung einer Lenkvorrichtung 10 des Fahrzeugs 1, zum Beispiel einer Lenkstange, erfasst wird.

Insbesondere wird eine Lenkmanöverinformation erzeugt und an die Betriebsvorrichtung 8 übertragen, wenn eine Drehung einer Rotationsachse 11 eines Rades 3 des Fahrzeugs 1 erfasst wird.

### Bezugszeichenliste

- 1: Fahrzeug
- 2: Erste Achse
- 3: Rad
- 4: Reifen
- 5: Mindestens eine zweite Achse
- 6: Bremssystem
- 7: Bremsvorrichtung
- 8: Betriebsvorrichtung
- 9: Vorrichtung des Fahrzeugs zur Erfassung, ob ein Lenkmanöver stattgefunden hat
- 10: Lenkvorrichtung
- 11: Rotationsachse eines Rades
- 12: Fahrzeugbordcomputer

## Patentansprüche

1. Verfahren zum Betreiben eines Fahrzeugs (1), aufweisend die folgenden Schritte:
- Bereitstellen eines Fahrzeugs (1), wobei das Fahrzeug (1) eine erste Achse (2) mit Rädern (3) aufweist, wobei die Räder (3) Reifen (4) aufweisen, und mindestens eine zweite Achse (5) mit Rädern (3) aufweist, wobei die Räder (3) Reifen (4) aufweisen, und ein Bremssystem (6) aufweist, wobei das Bremssystem (6) eine Bremsvorrichtung (7), geeignet zum Bremsen der Räder (3) der ersten Achse (2) und der Räder (3) der mindestens einen zweiten Achse (5), und eine Betriebsvorrichtung (8), geeignet zum Betreiben der Bremsvorrichtung (7), aufweist;
- Starten eines Bremsvorgangs mit der Bremsvorrichtung (7) und Bremsen der Räder (3) der ersten Achse (2) und der Räder (3) der mindestens einen zweiten Achse (5);
- Bestimmen von Rotationsgeschwindigkeiten der Räder (3) der ersten Achse (2) und der Räder (3) der mindestens einen zweiten Achse (5);
- Vergleichen der jeweiligen Rotationsgeschwindigkeiten der Räder (3) der ersten Achse (2) und der Räder (3) der mindestens einen zweiten Achse (5) mit einer Schwellengeschwindigkeit;
**gekennzeichnet durch die weiteren Schritte:**
- Prüfen, ob ein Lenkmanöver an einer Achse (2, 5) des Fahrzeugs (1) erfolgt, wobei das Lenkmanöver dem Bremsvorgang eindeutig zugeordnet werden kann;
- Übertragen einer Lenkmanöverinformation über ein Lenkmanöver an die Betriebsvorrichtung (8), für den Fall, wonach ein Lenkmanöver für eine Achse (2, 5) des Fahrzeugs (1) erfasst wird,
wobei für den Fall, wonach die Lenkmanöverinformation über ein Lenkmanöver, wobei das Lenkmanöver dem Bremsvorgang eindeutig zugeordnet werden kann, an die Betriebsvorrichtung (8) übertragen worden ist und die Rotationsgeschwindigkeit eines Rades (3) der Achse (2, 5) des Fahrzeugs (1), für die ein Lenkmanöver erfasst wird, kleiner als die Schwellengeschwindigkeit ist, die Bremsvorrichtung (7) für diese Achse (2, 5) derart betrieben wird, dass die Räder (3) dieser Achse (2, 5) nicht mehr mit der Bremsvorrichtung (7) gebremst werden.

2. Verfahren nach Anspruch 1, **dadurch gekennzeichnet, dass** die Räder (3) der anderen Achse (2, 5), wobei für die andere Achse (2, 5), nach Prüfung dieser Achse (2, 5) auf ein mögliches Lenkmanöver dieser Achse (2, 5), kein Lenkmanöver erfasst wird, mit der Bremsvorrichtung (7) weiter gebremst werden.

3. Verfahren nach Anspruch 1 oder Anspruch 2, **dadurch gekennzeichnet, dass** die Bremsvorrichtung (7) für die Achse (2, 5), für die ein Lenkmanöver erfasst wird, derart betrieben wird, dass die Räder (3) dieser Achse (2, 5) nicht mehr mit der Bremsvorrichtung (7) gebremst werden für den Fall, wonach die jeweiligen Rotationsgeschwindigkeiten von mindestens zwei Rädern (3) der Achse (2, 5) des Fahrzeugs (1), für die ein Lenkmanöver erfasst wird, kleiner als die Schwellengeschwindigkeit sind.

4. Verfahren nach Anspruch 1 oder Anspruch 2, **dadurch gekennzeichnet, dass** die Bremsvorrichtung (7) für die Achse (2, 5), für die ein Lenkmanöver erfasst wird, derart betrieben wird, dass die Räder (3) dieser Achse (2, 5) nicht mehr mit der Bremsvorrichtung (7) gebremst werden für den Fall, wonach die jeweiligen Rotationsgeschwindigkeiten sämtlicher Räder (3) der Achse (2, 5) des Fahrzeugs (1), für die ein Lenkmanöver erfasst wird, kleiner als die Schwellengeschwindigkeit sind.

5. Verfahren nach Anspruch 1 oder Anspruch 2, **dadurch gekennzeichnet, dass** die Bremsvorrichtung (7) für die Achse (2, 5), für die ein Lenkmanöver erfasst wird, derart betrieben wird, dass die Räder (3) dieser Achse (2, 5) nicht mehr mit der Bremsvorrichtung (7) gebremst werden für den Fall, wonach die jeweiligen Rotationsgeschwindigkeiten mindestens der Hälfte der Räder (3) der Achse (2, 5) des Fahrzeugs (1), für die ein Lenkmanöver erfasst wird, kleiner als die Schwellengeschwindigkeit sind.

6. Verfahren nach Anspruch 1 oder Anspruch 2, **dadurch gekennzeichnet, dass** die Bremsvorrichtung (7) für die Achse (2, 5), für die ein Lenkmanöver erfasst wird, derart betrieben wird, dass die Räder (3) dieser Achse (2, 5) nicht mehr mit der Bremsvorrichtung (7) gebremst werden für den Fall, wonach die jeweiligen Rotationsgeschwindigkeiten mehr als der Hälfte der Räder (3) der Achse (2, 5) des Fahrzeugs (1), für die ein Lenkmanöver erfasst wird, kleiner als die Schwellengeschwindigkeit sind.

7. Verfahren nach einem der vorhergehenden Ansprüche, **dadurch gekennzeichnet, dass** ein Lenkmanöver mittels einer Vorrichtung (9) des Fahrzeugs (1) erfasst wird und eine Lenkmanöverinformation von der Vorrichtung (9) des Fahrzeugs (1) an die Betriebsvorrichtung (8) übertragen wird.

8. Verfahren nach einem der vorhergehenden Ansprüche, **dadurch gekennzeichnet, dass** eine Lenkmanöverinformation erzeugt und an die Betriebsvorrichtung (8) übertragen wird, wenn eine Lenkwinkeländerung einer Lenkvorrichtung (10) des Fahrzeugs (1), zum Beispiel einer Lenkstange, erfasst wird.

9. Verfahren nach einem der vorhergehenden Ansprüche, **dadurch gekennzeichnet, dass** eine Lenkmanöverinformation erzeugt und an die Betriebsvorrichtung (8) übertragen wird, wenn eine Drehung einer Rotationsachse (11) eines Rades (3) des Fahrzeugs (1) erfasst wird.

10. Betriebsvorrichtung (8) für ein Bremssystem (6) für ein Fahrzeug (1), wobei die Betriebsvorrichtung (8) das Verfahren gemäß einem der vorhergehenden Ansprüche durchführt.

11. Fahrzeug (1), wobei das Fahrzeug (1) eine erste Achse (2) mit Rädern (3) aufweist, wobei die Räder (3) Reifen (4) aufweisen, und mindestens eine zweite Achse (5) mit Rädern (3) aufweist, wobei die Räder (3) Reifen (4) aufweisen, und ein Bremssystem (6) aufweist, wobei das Bremssystem (6) eine Bremsvorrichtung (7), geeignet zum Bremsen der Räder (3) der ersten Achse (2) und der Räder (3) der mindestens einen zweiten Achse (5), und eine Betriebsvorrichtung (8) gemäß dem vorhergehenden Anspruch aufweist.

## Claims

1. Method for operating a vehicle (1), having the following steps:
- providing a vehicle (1), wherein the vehicle (1) has a first axle (2) with wheels (3), wherein the wheels (3) have tyres (4), and has at least one second axle (5) with wheels (3), wherein the wheels (3) have tyres (4), and has a brake system (6), wherein the brake system (6) has a braking device (7), suitable for braking the wheels (3) of the first axle (2) and the wheels (3) of the at least one second axle (5), and an operating device (8), suitable for operating the braking device (7);
- starting a braking operation with the braking device (7) and braking the wheels (3) of the first axle (2) and the wheels (3) of the at least one second axle (5);
- determining rotational speeds of the wheels (3) of the first axle (2) and the wheels (3) of the at least one second axle (5);
- comparing the respective rotational speeds of the wheels (3) of the first axle (2) and the wheels (3) of the at least one second axle (5) with a threshold speed; **characterized by** the further steps of:
- checking whether a steering manoeuvre where the steering manoeuvre can be clearly assigned to the braking operation is taking place at an axle (2, 5) of the vehicle (1);
- transmitting steering-manoeuvre information about a steering manoeuvre to the operating device (8) in the event that a steering manoeuvre for an axle (2, 5) of the vehicle (1) is sensed,
wherein, in the event that the steering-manoeuvre information about a steering manoeuvre where the steering manoeuvre can be clearly assigned to the braking operation has been transmitted to the operating device (8) and the rotational speed of a wheel (3) of the axle (2, 5) of the vehicle (1) for which a steering manoeuvre is sensed is lower than threshold speed, the braking device (7) for this axle (2, 5) is operated in such a way that the wheels (3) of this axle (2,5) are no longer braked by the braking device (7).

2. Method according to Claim 1, **characterized in that** the wheels (3) of the other axle (2, 5) continue to be braked by the braking device (7) if, after checking this axle (2, 5) for a possible steering manoeuvre of this axle (2, 5), no steering manoeuvre is sensed for the other axle (2, 5).

3. Method according to Claim 1 or Claim 2, **characterized in that** the braking device (7) for the axle (2, 5) for which a steering manoeuvre is sensed is operated in such a way that the wheels (3) of this axle (2, 5) are no longer braked by the braking device (7) in the event that the respective rotational speeds of at least two wheels (3) of the axle (2, 5) of the vehicle (1) for which a steering manoeuvre is sensed are less than the threshold speed.

4. Method according to Claim 1 or Claim 2, **characterized in that** the braking device (7) for the axle (2, 5) for which a steering manoeuvre is sensed is operated in such a way that the wheels (3) of this axle (2, 5) are no longer braked by the braking device (7) in the event that the respective rotational speeds of all the wheels (3) of the axle (2, 5) of the vehicle (1) for which a steering manoeuvre is sensed are less than the threshold speed.

5. Method according to Claim 1 or Claim 2, **characterized in that** the braking device (7) for the axle (2, 5) for which a steering manoeuvre is sensed is operated in such a way that the wheels (3) of this axle (2, 5) are no longer braked by the braking device (7) in the event that the respective rotational speeds of at least half of the wheels (3) of the axle (2, 5) of the vehicle (1) for which a steering manoeuvre is sensed are less than the threshold speed.

6. Method according to Claim 1 or Claim 2, **characterized in that** the braking device (7) for the axle (2, 5) for which a steering manoeuvre is sensed is operated in such a way that the wheels (3) of this axle (2, 5) are no longer braked by the braking device (7) in the event that the respective rotational speeds of more than half of the wheels (3) of the axle (2, 5) of the vehicle (1) for which a steering manoeuvre is sensed are less than the threshold speed.

7. Method according to one of the preceding claims, **characterized in that** a steering manoeuvre is sensed by means of a device (9) of the vehicle (1) and steering-manoeuvre information is transmitted from the device (9) of the vehicle (1) to the operating device (8).

8. Method according to one of the preceding claims, **characterized in that** steering-manoeuvre information is generated and transmitted to the operating device (8) if a change in the steering angle of a steering device (10) of the vehicle (1), for example a steering track rod, is sensed.

9. Method according to one of the preceding claims, **characterized in that** steering-manoeuvre information is generated and transmitted to the operating device (8) if a rotation of an axis of rotation (11) of a wheel (3) of the vehicle (1) is sensed.

10. Operating device (8) for a brake system (6) for a vehicle (1), wherein the operating device (8) carries out the method according to one of the preceding claims.

11. Vehicle (1), wherein the vehicle (1) has a first axle (2) with wheels (3), wherein the wheels (3) have tyres (4), and has at least one second axle (5) with wheels (3), wherein the wheels (3) have tyres (4), and has a brake system (6), wherein the brake system (6) has a braking device (7), suitable for braking the wheels (3) of the first axle (2) and the wheels (3) of the at least one second axle (5), and an operating device (8) according to the preceding claim.

## Revendications

1. Procédé pour faire fonctionner un véhicule (1), comprenant les étapes suivantes :
- se mettre à disposition un véhicule (1), le véhicule (1) comprenant un premier essieu (2) équipé de roues (3), les roues (3) étant munies de pneumatiques (4), et au moins un deuxième essieu (5) équipé de roues (3), les roues (3) étant munies de pneumatiques (4), et un système de freinage (6), le système de freinage (6) comprenant un dispositif de freinage (7) adapté pour freiner les roues (3) du premier essieu (2) et les roues (3) dudit au moins un deuxième essieu (5), et un dispositif d'entraînement (8) adapté pour actionner le dispositif de freinage (7) ;
- démarrer un processus de freinage avec le dispositif de freinage (7) et freiner les roues (3) du premier essieu (2) et les roues (3) dudit au moins un deuxième essieu (5) ;
- déterminer les vitesses de rotation des roues (3) du premier essieu (2) et des roues (3) dudit au moins un deuxième essieu (5) ;
- comparer les vitesses de rotation respectives des roues (3) du premier essieu (2) et des roues (3) dudit au moins un deuxième essieu (5) à une vitesse seuil ;
**caractérisé par** les étapes supplémentaires suivantes :
- vérifier si une manœuvre de braquage est effectuée sur un essieu (2, 5) du véhicule (1), la manœuvre de braquage étant apte à être clairement associée au processus de freinage ;
- transmettre au dispositif d'entraînement (8) une information de manœuvre de braquage concernant une manœuvre de braquage, dans le cas où une manœuvre de braquage est détectée pour un essieu (2, 5) du véhicule (1),
dans le cas où l'information de manœuvre de braquage, qui peut clairement être attribuée au processus de freinage, a été transmise au dispositif d'entraînement (8) et si la vitesse de rotation d'une roue (3) de l'essieu (2, 5) du véhicule (1), pour laquelle une manœuvre de braquage est détectée, est inférieure à la vitesse seuil, le dispositif de freinage (7) pour cet essieu (2, 5) est actionné de telle sorte que les roues (3) de cet essieu (2, 5) ne sont plus freinées par le dispositif de freinage (7).

2. Procédé selon la revendication 1, **caractérisé en ce que** les roues (3) de l'autre essieu (2, 5), pour l'autre essieu (2, 5) aucune manœuvre de braquage n'étant détectée après vérification de cet essieu (2, 5) quant à une éventuelle manœuvre de braquage de cet essieu (2, 5), continuent d'être freinées par le dispositif de freinage (7).

3. Procédé selon la revendication 1 ou la revendication 2, **caractérisé en ce que** le dispositif de freinage (7) pour l'essieu (2, 5) pour lequel une manœuvre de braquage est détectée est actionné de telle sorte que les roues (3) de cet essieu (2, 5) ne sont plus freinées par le dispositif de freinage (7) si les vitesses de rotation respectives d'au moins deux roues (3) de l'essieu (2, 5) du véhicule (1), pour lequel une manœuvre de braquage est détectée, sont inférieures à la vitesse seuil.

4. Procédé selon la revendication 1 ou la revendication 2, **caractérisé en ce que** le dispositif de freinage (7) pour l'essieu (2, 5) pour lequel une manœuvre de braquage est détectée est actionné de telle sorte que les roues (3) de cet essieu (2, 5) ne sont plus freinées par le dispositif de freinage (7) si les vitesses de rotation respectives de toutes les roues (3) de l'essieu (2, 5) du véhicule (1), pour lequel une manœuvre de braquage est détectée, sont inférieures à la vitesse seuil.

5. Procédé selon la revendication 1 ou la revendication 2, **caractérisé en ce que** le dispositif de freinage (7) pour l'essieu (2, 5) pour lequel une manœuvre de braquage est détectée est actionné de telle sorte que les roues (3) de cet essieu (2, 5) ne soient plus freinées par le dispositif de freinage (7) si les vitesses de rotation respectives d'au moins la moitié des roues (3) de l'essieu (2, 5) du véhicule (1), pour lequel une manœuvre de braquage est détectée, sont inférieures à la vitesse seuil.

6. Procédé selon la revendication 1 ou la revendication 2, **caractérisé en ce que** le dispositif de freinage (7) pour l'essieu (2, 5) pour lequel une manœuvre de braquage est détectée est actionné de telle sorte que les roues (3) de cet essieu (2, 5) ne soient plus freinées par le dispositif de freinage (7) si les vitesses de rotation respectives de plus de la moitié des roues (3) de l'essieu (2, 5) du véhicule (1), pour lequel une manœuvre de braquage est détectée, sont inférieures à la vitesse seuil.

7. Procédé selon l'une des revendications précédentes, **caractérisé en ce qu'**une manœuvre de braquage est détectée au moyen d'un dispositif (9) du véhicule (1) et qu'une information de manœuvre de braquage est transmise du dispositif (9) du véhicule (1) au dispositif d'entraînement (8).

8. Procédé selon l'une des revendications précédentes, **caractérisé en ce qu'**une information de manœuvre de braquage est générée et transmise au dispositif d'entraînement (8) lorsqu'un changement d'angle de braquage d'un dispositif de direction (10) du véhicule (1), par exemple une barre de direction, est détecté.

9. Procédé selon l'une des revendications précédentes, **caractérisé en ce qu'**une information de manœuvre de braquage est générée et transmise au dispositif d'entraînement (8) lorsqu'une rotation d'un axe de rotation (11) d'une roue (3) du véhicule (1) est détectée.

10. Dispositif d'entraînement (8) pour un système de freinage (6) pour un véhicule (1), le dispositif d'entraînement (8) mettant en œuvre le procédé selon l'une des revendications précédentes.

11. Véhicule (1), le véhicule (1) comprenant un premier essieu (2) équipé de roues (3), les roues (3) étant munies de pneumatiques (4), et au moins un deuxième essieu (5) équipé de roues (3), les roues (3) étant munies de pneumatiques (4), et un système de freinage (6), le système de freinage (6) comprenant un dispositif de freinage (7) adapté pour freiner les roues (3) du premier essieu (2) et les roues (3) dudit au moins un deuxième essieu (5), et un dispositif d'entraînement (8) selon la revendication précédente.
